Europäisches Patentamt

European Patent Office

Office européen des brevets

(19)

(11) EP 0 788 220 A1

(12) DEMANDE DE BREVET EUROPEEN

(43) Date de publication:
06.08.1997 Bulletin 1997/32

(51) Int Cl.⁶: H02P 6/08, B60L 11/18

(21) Numéro de dépôt: 97400132.3

(22) Date de dépôt: 21.01.1997

(84) Etats contractants désignés:
DE FR IT

(30) Priorité: 30.01.1996 FR 9601058

(71) Demandeurs:
• THOMSON-CSF
75008 Paris (FR)
• Semikron International
90431 Nürnberg (DE)

(72) Inventeurs:
• Levy, Alain, Thomson-CSF, SCPI
94117 Arcueil Cedex (FR)
• Schimanek, Ernst, Thomson-CSF, SCPI
94117 Arcueil Cedex (FR)
• Dietze, Wolfram, Thomson-CSF, SCPI
94117 Arcueil Cedex (FR)

(74) Mandataire: Simonnet, Christine et al
THOMSON-CSF-S.C.P.I.,
13, Avenue du Président Salvador Allende
94117 Arcueil Cédex (FR)

(54) Onduleur d'alimentation d'un moteur électrique de traction d'un véhicule

(57)    Onduleur d'alimentation en courant alternatif des bobinages du stator d'un moteur électrique synchrone, notamment pour la traction d'un véhicule électrique.

Lors de chaque alternance du courant alternatif, l'onduleur à interrupteurs à état solide délivre des paliers à intensité constante. Au cours de chaque palier, l'intensité du courant est déterminée par le rapport cyclique d'un signal de découpage commandant la conduction des interrupteurs, à transistors ou à thyristors, de l'onduleur. La fréquence f du signal de découpage présente, à vitesse nulle du rotor, une valeur (f', 1 kHz) inférieure à la fréquence (8 kHz) de découpage pour une vitesse différente de zéro.

Ainsi, les pertes au démarrage, ou à rotor bloqué, sont minimisées.

FIG.4

## Description

L'invention est relative à un onduleur d'alimentation d'un moteur électrique de traction, notamment pour véhicule.

Elle concerne plus particulièrement le système de traction d'un véhicule électrique comprenant un moteur synchrone à rotor, à aimant(s) permanent(s) ou bobiné, et un stator bobiné pour engendrer, quand il est alimenté en énergie électrique, un champ magnétique tournant provoquant la rotation du rotor.

L'alimentation des bobinages du stator est réalisée par un onduleur qui, en général, tire son énergie d'une batterie d'accumulateurs.

Un onduleur présente un nombre de paires d'interrupteurs commandés égal au nombre de bobinages, ou phases, que comporte le bobinage du stator. Dans l'exemple le plus courant, le stator du moteur synchrone est triphasé, l'onduleur comporte donc trois paires d'interrupteurs commandés, par exemple des transistors ou des thyristors. Dans ce qui suit, on ne considérera que le seul exemple du stator triphasé et de l'onduleur à transistors.

Chaque paire de transistors est affectée à une phase du stator. Dans une de ces paires, un transistor permet le passage du courant dans un sens déterminé dans la phase correspondante et, l'autre transistor permet que le courant circule en sens contraire dans la même phase. Bien entendu, au cours du fonctionnement, un seul des deux transistors d'une paire est conducteur à la fois. La commande des transistors est telle que chaque phase est alimentée par un signal alternatif et ces signaux alternatifs sont déphasés de 120° les uns par rapport aux autres de façon à engendrer le champ tournant.

La commande permet d'auto piloter le moteur synchrone, c'est-à-dire que la fréquence du signal alternatif est adaptée à la vitesse du rotor afin de garder le synchronisme entre le champ tournant et le rotor. A cet effet, un capteur lié au rotor indique à chaque instant la position angulaire de ce dernier. Le signal fourni par le capteur est utilisé pour commander les transistors et, notamment, pour régler la fréquence des signaux alternatifs.

Chaque alternance du signal alternatif est engendrée par un nombre déterminé de paliers de durées en général égales, un palier correspondant à un courant d'intensité constante. En général, le nombre de paliers par demie alternance est égal au nombre de phases du stator.

Les phases du bobinage du stator sont pratiquement identiques entre elles. De même, les transistors ont tous sensiblement les mêmes caractéristiques.

Pour obtenir la modulation nécessaire des intensités (afin d'engendrer les courants alternatifs) la conduction de chaque transistor est commandée par une modulation de largeur d'impulsion MLI (Pulse width modulation, PWM, en langue anglaise). Cette modulation consiste à découper la conduction de chaque transistor suivant une fréquence élevée, par exemple de 8 kHz, l'intensité moyenne étant déterminée par le rapport cyclique, c'est-à-dire par le rapport entre, d'une part, la durée t de conduction du transistor au cours d'une période T du signal à haute fréquence et, d'autre part, cette période T. Plus le rapport cyclique est grand et plus l'intensité moyenne est élevée. Dans un exemple le rapport cyclique varie entre 0 et 1/2.

L'intensité du courant dans une phase est égale à la somme des intensités des courants circulant, en sens contraire, dans les deux autres phases.

En fonctionnement normal, quand le moteur tourne à vitesse importante, les charges des six transistors sont réparties uniformément au cours du temps.

Par contre, quand les bobinages ou phases du stator sont alimentés mais que le rotor ne tourne pas, notamment, au démarrage ou du fait d'un blocage, ces phases sont alimentées suivant une séquence particulière déterminée par la position relative du rotor par rapport au stator. Dans un exemple, trois des six transistors sont conducteurs et l'un de ces trois transistors est traversé par un courant d'une intensité double de celle du courant traversant chacun des deux autres transistors. Dans un autre exemple, deux des six transistors sont conducteurs.

Dans ces conditions, au moins un transistor subit une surcharge, c'est-à-dire qu'il est parcouru par un courant moyen maximum pendant un temps supérieur au temps pendant lequel il est parcouru par le même courant au cours du fonctionnement normal du moteur.

Pour tenir compte de cette situation, jusqu'à présent, on a prévu deux solutions. Dans la première de ces solutions, on dimensionne les transistors de l'onduleur d'une façon suffisante pour ne pas altérer les caractéristiques du moteur, notamment pour garder un couple de valeur importante à vitesse faible. Dans la deuxième solution, les transistors sont dimensionnés pour le régime permanent de rotation et, dans ce cas, le couple à basse vitesse - au démarrage - présente une valeur réduite qui peut se révéler insuffisante.

La première solution est onéreuse et la seconde n'est pas satisfaisante pour le fonctionnement du moteur.

L'invention remédie à ces inconvénients. Elle part de la constatation que les pertes dans un transistor - et de façon plus générale dans un interrupteur à état solide - dépendent non seulement de l'intensité du courant traversant le transistor, mais également de la fréquence de découpage. Ces dernières pertes sont appelées pertes de commutation.

L'invention est caractérisée par le fait que des moyens sont prévus pour qu'à vitesse de rotation nulle du rotor, la fréquence de découpage (ou commutation) soit inférieure à la fréquence de découpage de la modulation à largeur d'impulsion pour une vitesse du rotor différente de zéro.

De préférence, la fréquence de découpage au démarrage est choisie de façon telle que les pertes dans les transistors correspondants soient, au cours de cette phase de démarrage, égales aux pertes maximales, dans les mêmes transistors, en régime permanent.

L'invention sera mieux comprise et d'autres caractéristiques et avantages apparaîtront avec la description de certains de ses modes de réalisation, celle-ci étant effectuée en se référant aux dessins ci-annexés sur lesquels :

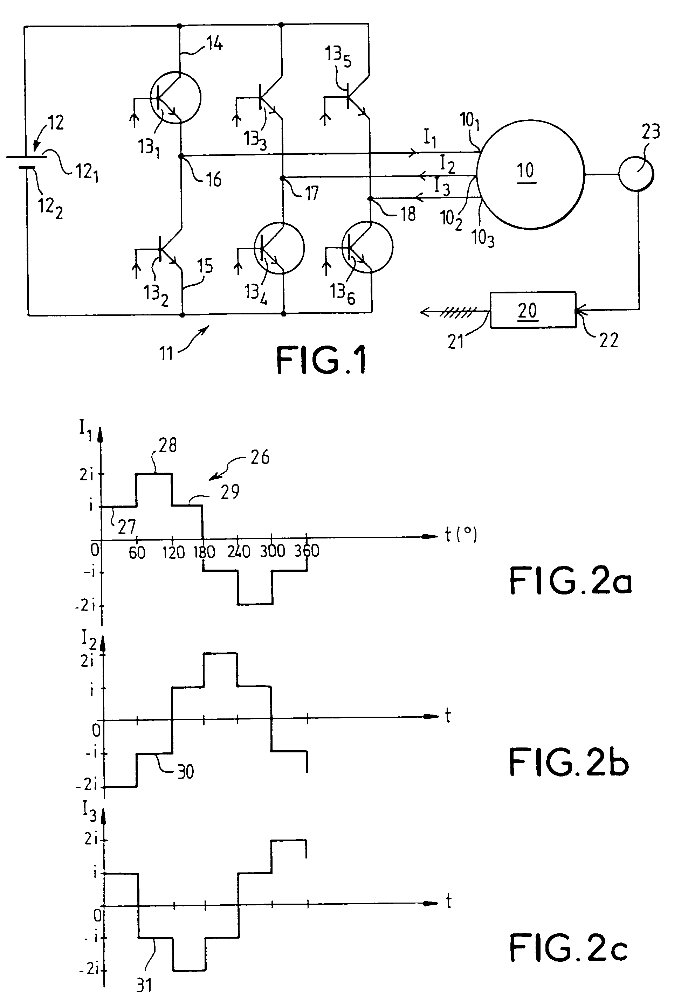

la figure 1 est un schéma de principe d'un onduleur et d'un moteur,

les figures $2_a$, $2_b$ et $2_c$ sont des diagrammes montrant les intensités des courants dans chaque phase du stator du moteur de la figure 1,

les figures $3_a$, $3_b$ et $3_c$ sont des diagrammes analogues à ceux des figures $2_a$, $2_b$, et $2_c$ mais pour une variante,

la figure 4 est un diagramme montrant un mode de mise en oeuvre de l'invention,

la figure 5 est un schéma d'un exemple de réalisation,

la figure 6 est un diagramme montrant le principe de fonctionnement du circuit de la figure 5, et

la figure 7 est un diagramme montrant les avantages de l'invention.

Sur la figure 1, le moteur 10 est un moteur synchrone, c'est-à-dire un moteur dont le rotor comprend un ou plusieurs aimants permanents ou un bobinage et dont le stator comprend un bobinage triphasé dont chaque phase est alimentée par un courant alternatif. Dans ces phases, les courants sont décalés de 120° les uns par rapport aux autres. Dans ce qui suit, on décrira un moteur synchrone à rotor à aimants permanents.

On rappelle ici le principe de fonctionnement, bien connu, d'un tel moteur synchrone : les courants dans les phases du stator engendrent un champ électrique tournant qui entraîne la rotation des aimants du rotor et donc la rotation du moteur. La vitesse de rotation de ce moteur dépend de la fréquence d'alimentation des phases du stator.

Ces phases du stator du moteur 10 sont alimentées par un onduleur 11 lui-même alimenté par une batterie d'accumulateurs 12.

L'onduleur 11 comporte trois paires de transistors, respectivement $13_1, 13_2$ ; $13_3, 13_4$ ; $13_5, 13_6$. Dans chaque paire, par exemple les transistors $13_1$ et $13_2$, ces éléments sont en série et branchés dans le même sens. Le collecteur 14 du transistor $13_1$ est relié à la borne positive $12_1$ de la batterie 12 tandis que l'émetteur 15 du transistor $13_2$ est relié à la borne négative $12_2$ de la batterie 12. Les paires de transistors $13_3, 13_4$ ainsi que $13_5, 13_6$ sont branchées de manière identique aux bornes de la batterie 12.

La borne commune 16 à l'émetteur du transistor $13_1$ et au collecteur du transistor $13_2$ est reliée à l'entrée $10_1$ de la première phase du stator du moteur 10. De même, la borne commune 17 aux transistors $13_3$ et $13_4$ est reliée à l'entrée $10_2$ de la seconde phase du stator du moteur 10 et la borne commune 18 aux transistors $13_5$ et $13_6$ est reliée à l'entrée $10_3$ de la troisième phase du stator du moteur 10.

La conduction des divers transistors de l'onduleur 11 est commandée par un dispositif 20 présentant des sorties parallèles 21 dont chacune est associée à la base de l'un des transistors. Ce dispositif 20 présente une entrée 22 recevant un signal d'un capteur 23 fournissant une information sur la position du rotor du moteur 10 par rapport au stator.

La conduction des transistors de l'onduleur 11 est commandée comme représenté sur les figures $2_a$, $2_b$ et $2_c$ dans lesquelles :

La figure $2_a$ représente l'intensité $I_1$ du courant électrique dans la première phase du stator du moteur 10, la figure $2_b$ représente l'intensité $I_2$ du courant dans la seconde phase du moteur 10 et la figure $2_c$ représente $I_3$ l'intensité du courant dans la troisième phase de ce moteur.

Chacun de ces courants $I_1$, $I_2$, $I_3$ est alternatif. Ils ont tous les trois la même fréquence et sont déphasés de 120° les uns par rapport aux autres. Ainsi, le courant $I_2$ présente un déphasage de 120° par rapport au courant $I_1$ et le courant $I_3$ présente un déphasage de 120° par rapport au courant $I_2$.

Chaque demie alternance est formée de trois paliers. Ainsi, la première alternance positive 26 du courant $I_1$ est formée d'un premier palier 27 d'intensité i entre les instants 0 et 60°, d'un second palier 28 d'intensité 2i entre les instants 60 et 120° et d'un troisième palier 29 d'intensité i entre les instants 120 et 180° Ensuite, pour l'alternance négative suivante, $I_1$ présente aussi trois paliers d'intensités -i, -2i et -i respectivement.

On voit qu'au cours de chaque séquence de durée 60°, la somme des courants $I_1 + I_2 + I_3$ est nulle. Pour obtenir une séquence, par exemple la seconde, correspondant au palier 28 sur la figure $2_a$ et aux paliers 30 et 31 sur les figures $2_b$ et $2_c$, respectivement, on commande les transistors 13 comme représenté sur la figure 1 : les transistors $13_1$, $13_4$ et $13_6$ sont conducteurs tandis que les transistors $13_2$, $13_3$ et $13_5$ sont bloqués. Les transistors à l'état conducteur sont représentés entourés d'un cercle. La fréquence et la phase des courants $I_1$, $I_2$ et $I_3$, c'est-à-dire les instants de conduction des divers transistors, sont déterminées par la position du rotor du moteur 10 par rapport à son stator, cette position étant mesurée par le capteur 23 et fournie au dispositif 20 commandant lesdits transistors.

Dans la variante représentée par les diagrammes $3_a$, $3_b$ et $3_c$, les courants $I_1$, $I_2$, $I_3$ sont également déphasés les uns par rapport aux autres, mais contrairement à l'exemple précédent, au cours de chaque séquence correspondant à une rotation de 60,° seulement deux phases sont parcourues par un courant. Ainsi, entre 0° et 60°, seuls les transistors $13_1$ et $13_4$ sont conducteurs, l'intensité $I_1$ a donc une valeur +i, l'intensité $I_2$ la valeur

-i et l'intensité $I_3$ est nulle. Entre 60° et 120°, seuls les transistors $13_1$ et $13_6$ sont conducteurs, l'intensité $I_1$ vaut donc +i, l'intensité $I_2$ est nulle et l'intensité $I_3$ vaut -i.

Les séquences qui suivent correspondent aux états suivants des transistors : entre 120° et 180°, les transistors $13_3$ et $13_6$ sont conducteurs ; entre 180° et 240°, les transistors $13_2$ et $13_3$ sont conducteurs ; entre 240° et 300°, les transistors $13_2$ et $13_5$ sont conducteurs et entre 300° et 360°, ce sont les transistors $13_4$ et $13_5$ qui laissent passer le courant.

Dans cette variante, chaque demie alternance se compose d'un palier 70 (figure $3_c$), de durée 120° et au cours duquel le courant circule, entouré par des paliers 71 et 72, chacun de durée 60° et au cours desquels le courant a une intensité nulle.

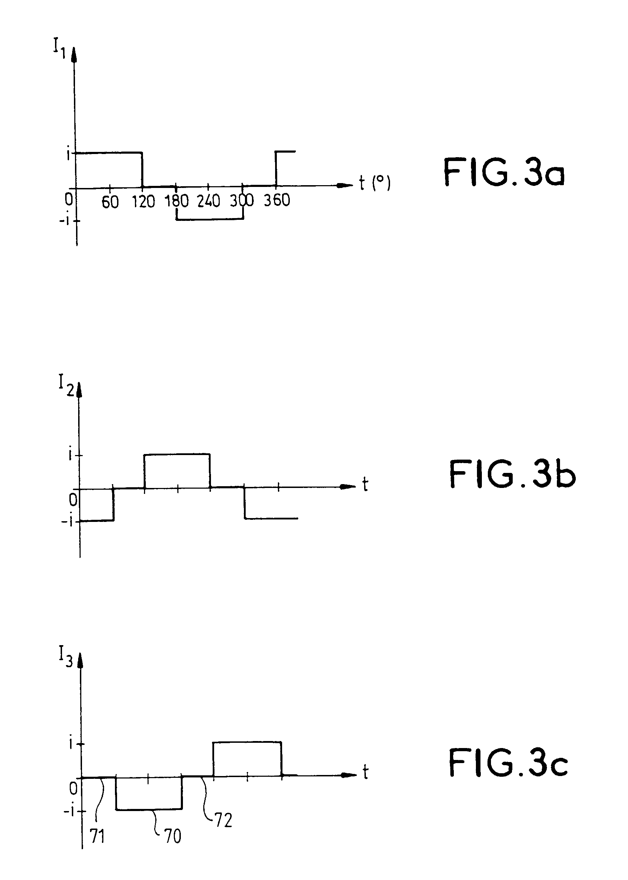

Pour obtenir les intensités i, -i et 2i, -2i des paliers 27, 28, 29, etc. (figures $2_a$ à $2_c$) ou les intensités i et -i des paliers 70 (figures 3 à $3_c$), lors de chaque séquence, on commande, par une modulation à largeur d'impulsion (MLI), la conduction du transistor activé correspondant. Dans l'exemple, la modulation à largeur d'impulsion est à fréquence de 8 kHz. Pendant chaque période de ce signal à 8 kHz, le rapport cyclique est un demi pour obtenir l'intensité maximum. Ce rapport est compris entre zéro et un demi pour obtenir une intensité plus faible. Ainsi, au cours de la seconde séquence représentée sur la figure 1, le rapport cyclique du signal à haute fréquence appliqué sur la base du transistor $13_1$ est un demi pour obtenir le palier 28 tandis que les rapports cycliques pour les transistors $13_4$ et $13_6$ sont de un quart pour les paliers 30 et 31.

On comprend aisément qu'en régime permanent, quand le moteur tourne, les divers transistors sont sollicités de manière uniforme au cours du temps.

Par contre, quand le rotor est bloqué, les transistors sont commandés en permanence de façon non uniforme. Par exemple, si le capteur 23 indique une position du rotor telle que la commande doit correspondre aux paliers 28, 30 et 31 (figure 2), seuls les transistors $13_1$, $13_4$ et $13_6$ sont conducteurs en permanence et le transistor $13_1$ est parcouru par un courant d'une intensité double de celle parcourant les transistors $13_4$ et $13_6$. Ainsi, le transistor $13_1$ est parcouru en permanence par un courant d'intensité maximum. Ce transistor subit donc un échauffement supérieur à celui qu'il subit en régime permanent.

Bien que les transistors $13_3$ et $13_6$ ne soient pas parcourus par un courant d'intensité maximum, ils peuvent cependant aussi subir un échauffement excessif du fait qu'ils sont conducteurs en permanence.

Un comportement analogue à celui du rotor bloqué intervient aussi au démarrage puisque, dans cette phase de fonctionnement, trois transistors sont sollicités plus longtemps que les autres.

Dans la variante représentée sur la figure 3, ce sont deux transistors qui sont sollicités plus longtemps que les autres au démarrage ou à rotor bloqué.

Cette sollicitation supérieure d'au moins l'un des transistors pourrait conduire à dimensionner tous les transistors de manière à ce que l'échauffement au démarrage ou à rotor bloqué permette un couple maximum au démarrage. Cette solution serait chère. Si les transistors, qui sont des composants onéreux et dont le prix est fonction du dimensionnement, ne sont prévus que pour le régime permanent, les caractéristiques de couple au démarrage sont altérées, c'est-à-dire que le couple n'est pas maximum au démarrage.

Pour éviter un surdimensionnement des transistors - donc un surcoût - ou une altération des caractéristiques du moteur, on prévoit, selon l'invention, qu'au démarrage ou à rotor bloqué, la modulation de commande de chaque transistor est à fréquence sensiblement inférieure à la fréquence de la modulation en régime permanent. Si la fréquence de modulation (ou découpage) est, en régime permanent, de 8 kHz, au démarrage, cette modulation sera, dans un exemple, de l'ordre de 1 kHz.

On est, en effet, parti de la constatation que les pertes dans un transistor - ou dans un autre interrupteur commandé à état solide - présentent deux composantes : d'une part, une composante de conduction et, d'autre part, une composante de commutation. Les pertes par conduction sont proportionnelles à l'intensité du courant traversant le transistor et les pertes par commutation sont proportionnelles au courant, à la tension et à la fréquence de commutation. Ces pertes P correspondent ainsi à la formule suivante :

$$P = K_1I + K_2IUf.$$

Dans cette formule $K_1$ et $K_2$ sont des facteurs constants de proportionnalité, I est l'intensité du courant traversant le transistor, U est la tension aux bornes de ce même transistor, et f est la fréquence de commutation, c'est-à-dire la fréquence de la modulation à largeur d'impulsion dans le cas présent.

On voit que si la fréquence f diminue, les pertes P diminuent.

Dans l'exemple de réalisation préféré, on choisit la fréquence f' de modulation pour les vitesses faibles de manière telle, qu'à rotor bloqué ou au démarrage, les pertes dans un transistor soient égales à celles en régime permanent à la fréquence f.

Dans un exemple, cette fréquence f' est de 1 kHz, alors que la fréquence f en régime permanent est de 8 kHz. Bien entendu, la valeur de la fréquence f' dépend de $K_1$ et $K_2$, c'est-à-dire des caractéristiques des transistors.

Il est à noter que la fréquence de 8 kHz est choisie de manière, d'une part, à limiter les ondulations de courant et, d'autre part, à ne pas provoquer de nuisances sonores. En effet, lors du fonctionnement du moteur alimenté par l'onduleur, ce sont seulement les harmoniques supérieures à 2 qui provoqueront les vibrations d'amplitude les plus importantes, vibrations qui sont donc à des fréquences non audibles.

Par contre, la fréquence f' de l'ordre de 1 kHz provoque des vibrations audibles. Cette propriété du moteur et de son alimentation ne constitue pas un inconvénient gênant. Elle peut même être avantageuse car elle engendre un signal sonore de démarrage utile dans certaines circonstances.

Pour faire varier la fréquence de la modulation de largeur d'impulsion de f' à f, on peut procéder de diverses manières :

Dans une première réalisation, la fréquence f', de valeur réduite, n'est appliquée qu'au seul démarrage. Ensuite, on applique, sans transition, la valeur f.

Dans une autre réalisation, la commande est telle qu'on fait varier la fréquence de la modulation de f' à f de façon graduelle pendant un temps déterminé T.

Dans une variante, on fait dépendre la fréquence f de la vitesse de rotation du moteur.

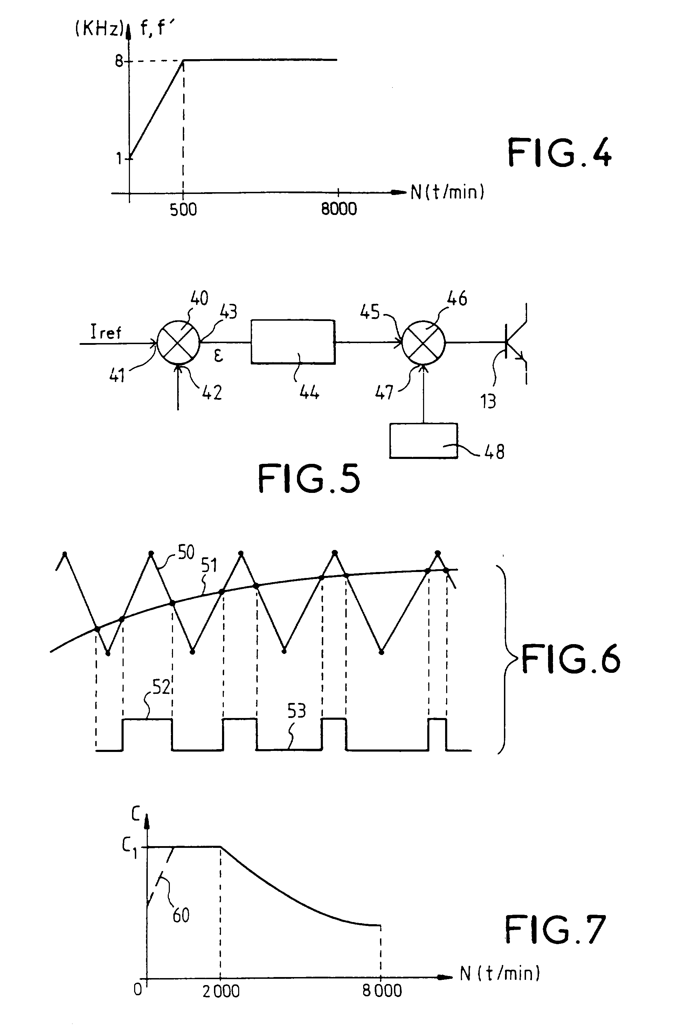

La figure 4 est un diagramme sur lequel on a porté, en abscisses, la vitesse N de rotation du moteur et, en ordonnées, la fréquence f de découpage, c'est-à-dire la fréquence de la modulation par largeur d'impulsion. Dans cet exemple, la fréquence f est commandée de façon telle qu'elle ait une valeur de 1 kHz pour une vitesse de rotation égale à zéro et qu'elle atteigne progressivement la valeur de 8 kHz pour une vitesse de rotation de l'ordre de 500 tours par minute.

La figure 5 est un schéma d'un circuit, de type analogique, destiné à la commande d'un transistor 13.

Dans cet exemple, un premier comparateur 40 présente une entrée 41 recevant la valeur $I_{ref}$ de l'intensité du courant désirée et une seconde entrée 42 recevant la valeur $I_{mes}$ de l'intensité du courant mesuré. En sortie 43 de ce comparateur 40, on obtient la différence ε entre les entrées 41 et 42 et cette entrée 43 est reliée à l'entrée 45 d'un autre comparateur 46 par l'intermédiaire d'un dispositif correcteur 44. Le comparateur 46 comprend une seconde entrée 47 reliée à la sortie d'un générateur 48 délivrant un signal de fréquence f variable. La sortie du comparateur 46 est reliée à la base d'un transistor 13.

Le fonctionnement du circuit de la figure 5 est représenté par le diagramme de la figure 6. Sur ce diagramme, le signal triangulaire 50 fourni par le générateur 48 de fréquence f variable est comparé au signal 51 à la sortie du correcteur 44. La sortie du comparateur 46 est à l'état "haut" 52 quand le signal 50 a une amplitude supérieure à celle du signal 51 et, réciproquement, la sortie du comparateur 46 est à l'état "bas" 53 quand l'amplitude du signal 50 est inférieure à l'amplitude du signal 51. On obtient ainsi, pour la commande du transistor 13, une modulation de largeur d'impulsion à la fréquence f du signal triangulaire 50.

Dans un exemple, les pertes maximales admissibles pour les transistors 13 sont de l'ordre de 300 watts et la fréquence en régime permanent est de 8 kHz tandis que la fréquence au démarrage est de 1 kHz.

Bien qu'en relation avec les figures 5 et 6, on ait décrit une réalisation de type analogique, il va de soi qu'une réalisation de type numérique entre dans le cadre de la présente description.

La figure 7 est un diagramme sur lequel on a porté, en abscisses, la vitesse N de rotation du moteur et, en ordonnées, le couple C. La caractéristique du moteur est telle que le couple présente une valeur constante C1 pour des vitesses comprises entre 0 et 2000 tours par minute. Ensuite, le couple C diminue jusqu'à 8000 tours par minute. On voit que pour les basses vitesses, à partir du démarrage (vitesse nulle) le couple garde la valeur maximum $C_1$. La courbe 60, en traits interrompus, représente le couple C qui serait obtenu si la fréquence f de la modulation de largeur d'impulsion était maintenue pour les basses vitesses. On voit que dans ces conditions, on obtiendrait une diminution du couple au démarrage.

L'invention n'est pas limitée à un moteur synchrone alimenté par un seul onduleur. Ainsi, dans une réalisation, le stator comporte une série de bobinages répartis autour du rotor et, chaque bobinage est alimenté par un onduleur.

**Revendications**

1. Onduleur (11) d'alimentation en courant alternatif du stator d'un moteur électrique à champ tournant, cet onduleur comportant des interrupteurs (13) commandés de type à état solide délivrant des courants alternatifs au stator, l'intensité de chacun des courants alternatifs présentant, au cours de chaque alternance, des séquences (27, 28, 29 ; 70, 71, 72) successives au cours de chacune desquelles l'intensité est sensiblement constante et est déterminée par le rapport cyclique d'un signal de découpage commandant la conduction de chacun des interrupteurs, caractérisé en ce qu'il comporte un moyen (48) pour conférer à la fréquence (f) du signal de découpage, une valeur (f') à vitesse de rotation nulle du rotor qui est inférieure à la fréquence de découpage pour une vitesse de rotation du rotor différente de zéro.

2. Onduleur selon la revendication 1 caractérisé en ce que la fréquence (f') de découpage à la vitesse nulle est choisie de façon telle que les pertes maximales de chaque interrupteur commandé soient, à vitesse nulle, les mêmes qu'en régime permanent.

3. Onduleur selon la revendication 1 ou 2 caractérisé en ce que la fréquence (f') de découpage augmente avec la vitesse de rotation du moteur.

4. Onduleur selon la revendication 3 caractérisé en ce que la fréquence (f') de découpage augmente avec la vitesse de rotation (N) du moteur jusqu'à une première valeur, cette fréquence (f) étant constante pour les vitesses de rotation supérieures à la première valeur.

5. Onduleur selon la revendication 3, caractérisé en ce que la fréquence de découpage augmente pendant un temps déterminé (T).

6. Onduleur selon l'une quelconque des revendications précédentes, caractérisé en ce que la fréquence (f) de découpage ayant en régime établi une valeur telle qu'elle produit des vibrations non audibles, la valeur (f') de cette fréquence à vitesse nulle produit des vibrations audibles.

7. Onduleur selon l'une quelconque des revendications précédentes, caractérisé en ce que la fréquence (f) est, en régime établi, de l'ordre de 8 kHz.

8. Onduleur selon l'une quelconque des revendications précédentes, caractérisé en ce que la fréquence de découpage à vitesse nulle est de l'ordre de 1 kHz.

9. Onduleur selon l'une quelconque des revendications précédentes, caractérisé en ce que les interrupteurs commandés (13) sont des transistors.

10. Onduleur selon l'une quelconque des revendications précédentes, caractérisé en ce que, dans chaque paire, les interrupteurs sont en série et l'ensemble de ces deux interrupteurs est aux bornes d'une batterie (12) d'accumulateurs, la commande (20) étant telle qu'à chaque instant un seul interrupteur est conducteur dans chaque paire et l'intensité du courant dans l'une des phases est égale au double de l'intensité du courant dans les deux autres phases.

11. Onduleur selon l'une quelconque des revendications précédentes, caractérisé en ce qu'étant destiné à l'alimentation d'un moteur synchrone, il comporte un capteur (23) fournissant un signal de position du rotor par rapport au stator du moteur, ce capteur commandant la séquence de fonctionnement des interrupteurs commandés (13).

12. Onduleur selon la revendication 11, caractérisé en ce que la commande (20) est telle qu'à chaque instant la fréquence du courant alternatif est maintenue à la valeur de synchronisme du rotor.

13. Véhicule électrique comportant un moteur de traction de type synchrone, de préférence à rotor à aimant(s) permanent(s), caractérisé en ce qu'il comporte un onduleur selon l'une quelconque des revendications précédentes.

14. Véhicule selon la revendication 13, caractérisé en ce que le stator du moteur (10) est du type triphasé et en ce que l'onduleur (11) comporte trois paires ($13_1$, $13_2$ ; $13_3$, $13_4$ ; $13_5$, $13_6$) d'interrupteurs commandés.

FIG.1

FIG.2a

FIG.2b

FIG.2c

FIG.3a

FIG.3b

FIG.3c

FIG.4

FIG.5

FIG.6

FIG.7

# EP 0 788 220 A1

<table>
<tr><td colspan="2">Office européen<br>des brevets</td><td>RAPPORT DE RECHERCHE EUROPEENNE</td><td>Numéro de la demande<br>EP 97 40 0132</td></tr>
</table>

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | PATENT ABSTRACTS OF JAPAN vol. 017, no. 608 (E-1457), 9 Novembre 1993 & JP 05 184182 A (HITACHI LTD), 23 Juillet 1993, * abrégé; figures 1-4 * | 1-14 | H02P6/08 B60L11/18 |
| X | PATENT ABSTRACTS OF JAPAN vol. 016, no. 554 (E-1293), 25 Novembre 1992 & JP 04 210797 A (SANYO ELECTRIC CO LTD), 31 Juillet 1992, * abrégé; figures 1,6,8 * | 1-3,6-14 | |
| P,X | PATENT ABSTRACTS OF JAPAN vol. 096, no. 007, 31 Juillet 1996 & JP 08 084500 A (MEIDENSHA CORP) * abrégé * | 1 | |
| A | PATENT ABSTRACTS OF JAPAN vol. 009, no. 061 (E-303), 19 Mars 1985 & JP 59 198881 A (FUJI DENKI SEIZO KK), 10 Novembre 1984, * abrégé * | 1 | DOMAINES TECHNIQUES RECHERCHES (Int.Cl.6) <br> H02P B60L |
| A | PATENT ABSTRACTS OF JAPAN vol. 013, no. 258 (M-838), 15 Juin 1989 & JP 01 064504 A (TOYOTA MOTOR CORP), 10 Mars 1989, * abrégé * | 1,7,8 | |

Le présent rapport a été établi pour toutes les revendications

| Lieu de la recherche | Date d'achèvement de la recherche | Examinateur |
|---|---|---|
| LA HAYE | 12 Mai 1997 | Bourbon, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)